# EUROPÄISCHE PATENTSCHRIFT

(11) **EP 1 388 423 B1**
(45) Veröffentlichungstag und Bekanntmachung des Hinweises auf die Patenterteilung: **23.11.2005**
(21) Anmeldenummer: 02017473.6
(22) Anmeldetag: 05.08.2002
(51) Int. Cl.: B41K 3/40, B41K 3/36

(54) **Einrichtung und Verfahren zum Perforieren eines Buches**
Method and apparatus for perforating a book
Methode et appareil pour perforer un livre

(43) Veröffentlichungstag der Anmeldung: 11.02.2004
(73) Patentinhaber: Kugler-Womako GmbH, 72622 Nürtingen (DE)
(72) Erfinder: Kneule, Mario, 72636 Frickenhausen (DE)

(56) Entgegenhaltungen:
- US-A- 3 226 527
- US-A- 5 556 826
- US-A- 5 557 311

## Beschreibung

Die vorliegende Erfindung betrifft eine Einrichtung und ein Verfahren zum Perforieren eines Buches nach dem Oberbegriff des Anspruchs 1 bzw. des Anspruchs 12.

Bei der Herstellung von Ausweis- und Kreditdokumenten wie z.B. Pässen, Scheckheften, Sparbüchern u.a. besteht oft die Notwendigkeit, diese - im allgemeinen als Buch bezeichneten - Dokumente zu perforieren. So kann beispielsweise auf Blätter von Pässen oder Scheckheften ein alphanumerischer Code aufzubringen sein. Ein solches Buch weist üblicherweise einen Deckel mit zwei Deckelteilen und eine Vielzahl von Blättern auf, die in einer Falz miteinander, beispielsweise durch Heften, Nähen, Kleben oder ähnliche Verbindungen, verbunden sind. Der Deckel deckt im zugeschlagenen Zustand des Buches die Blätter ab und bildet ein Deckelober- und ein Deckelunterteil aus, die miteinander verbunden sind.

Zum Perforieren eines Buches mittels Laserstrahlen ist es bekannt, das Buch durch Umschwenken eines Deckelteils zu öffnen, nicht zu perforierende Blätter umzublättern und zu perforierende Blätter hintereinanderliegend zusammenzudrücken und mittels Laserstrahlen zu perforieren. Eine bekannte Einrichtung zum Perforieren eines Buches umfasst eine Transportvorrichtung für das Buch, eine Lasereinheit zum perforieren der gewünschten Blätter, eine Anlageplatte für ein Deckelteil des Buches und eine den Laserstrahlen zugewandte Andruckplatte zum Zusammendrücken der zu perforierenden Blätter werden. Bei dem bekannten Verfahren und bei der bekannten Einrichtung liegen die zu perforierenden Blätter auf dem unteren Deckelteil auf, das wiederum auf einer Anlageplatte liegt. Zum Perforieren wird die Andruckplatte auf die zu perforierenden Blätter bewegt, um diese unter Einschluss des unteren Deckelteils gegen die Anlageplatte zusammenzudrücken. Die Andruckplatte ist mit der den Blättern gegenüberliegenden Seite unmittelbar den Laserstrahlen zugewandt und im allgemeinen mit einer Ausnehmung versehen, die ein Passieren der Laserstrahlen ermöglicht. Die Andruckplatte ist quasi zwischen die Laserstrahlen und die zu perforierenden Blätter geschaltet.

Ein Zusammendrücken ist für die Perforation mit Laserstrahlen bedeutsam, da Streuungen verursachende Zwischenräume zwischen den zu perforierenden Blättern vermieden werden sollen und die Eindringtiefe der Laserstrahlen genau auf die Schichtdicke der zu perforierenden Blätter abgestimmt sein soll. Mit dem bekannten Verfahren und mit der bekannten Einrichtung kann es zu Beschädigungen des unteren Deckelteils oder zwischen dem unteren Deckelteil und dem letzten zu perforierenden Blatt liegender Blätter kommen. So können beispielsweise durch das letzte Blatt hindurchtretende Laserstrahlen unerwünschte Brandspuren auf dem unteren Deckelteil oder Perforationen eines perforationsfrei zu haltenden Blattes erzeugen.

Aufgabe der vorliegenden Erfindung ist es, eine Einrichtung und eine Verfahren nach dem Oberbegriff des Anspruchs 1 bzw. des Anspruchs 12 anzugeben, die bzw. das ein zuverlässiges Perforieren zu perforierender Blätter eines Buches gewährleistet und Beschädigungen anderer Buchbestandteile vermeidet.

Diese Aufgabe wird durch eine Einrichtung mit den Merkmalen des Anspruchs 1 bzw. durch ein Verfahren mit den Merkmalen des Anspruchs 12 gelöst.

Auf diese Weise ist ein blattgenaues Perforieren ermöglicht und die Beschädigungsfreiheit anderer Buchbestandteile gewährleistet. Die Laserplatte ist zweckmäßiger Weise mit einer Laseröffnung zum Durchtritt der Laserstrahlen versehen. Die Laserplatte kann vorteilhaft von einer Gehäusewandung der Lasereinheit ausgebildet sein.

Ist die Andruckplatte gegenüber der Anlageplatte um mehr als 45 Grad geneigt angeordnet, können die Blätter zumindest über einen Teilbereich perforiert werden. Beträgt die Neigung etwa 90 Grad, können die Blätter in einem beliebigen Bereich perforiert werden.

Ist die Andruckplatte auf die Laserplatte hin- und herbewegbar vorgesehen, können die Blätter in ihrer aufgerichteten Stellung zuverlässig zusammengedrückt werden.

Weist die Transportvorrichtung zwei Spuren A und B mit jeweils einem Förderer auf und ist die Lasereinheit zwischen den Spuren A und B angeordnet und mit einem in Richtung der Spur A und Spur B jeweils hin- und herschwenkbaren Spiegel und zwei einander gegenüberliegenden Laserplatten versehen, können die Bücher der Spuren A und B mit einer Lasereinheit perforiert werden. Darüber hinaus ist es möglich, ein Buch der Spur A in eine Perforationsstellung vor die Laserplatte der Spur A zu transportieren, während ein Buch in der Spur B bzw. dessen zu perforierende Blätter gerade mit dem Laserstrahl perforiert werden. Hierbei erfährt die Lasereinheit eine optimale Auslastung.

Zweckmäßiger Weise weist die Transportvorrichtung einen in die Spuren A und B hin- und herschwenkbaren Greifer auf.

Ist der Greifer mit einer Buchdreheinheit versehen, können die Bücher der Spuren A und B zueinander optimal für ein Perforieren ausgerichtet werden. Die Buchdreheinheit ist vorteilhaft so ausgebildet, dass sie eine Drehung der Bücher um 180 Grad ermöglicht.

Weist der Greifer zwei aufeinander zu und voneinander weg schwenkbare Arme auf, kann ein aufgerichtetes Buch zuverlässig gegriffen werden. Ist ein Arm des Greifers an seinem freien Ende seitlich auswärts abgewinkelt ausgebildet, kann das dem Arm zugewandte Deckelteil zuverlässig an einem Zuschwenken gehindert werden.

Ist der Greifer parallel zu den Spuren A und B verschiebbar angeordnet, können die Bücher mit den aufgerichteten Blättern zuverlässig in Führungskanäle der Spuren A und B eingeführt werden.

Werden die Bücher in zwei benachbarten Spuren A und B transportiert und die zu perforierenden Blätter eines Buches der Spur A und eines Buches der Spur B durch Umlenkung des Laserstrahls der Lasereinheit spurweise abwechselnd perforiert, kann die Lasereinheit optimal ausgelastet werden.
Werden die Bücher in der Spur A gegenüber den Büchern der Spur B um 180 Grad gedreht eingelegt und transportiert, lassen sich die auf den Blättern der Bücher in Spur A und Spur B zu perforierenden Bereiche einander zugewandt ausrichten.

Weitere Ausgestaltungen der Erfindung sind den Unteransprüchen und der nachfolgenden Beschreibung entnehmbar.

Die Erfindung wird nachstehend anhand eines in den beigefügten Abbildungen schematisch dargestellten Ausführungsbeispiels einer Buchperforationsstraße näher erläutert.
- Fig. 1: zeigt schematisch eine Draufsicht auf eine Buchperforationsstraße,
- Fig. 2: zeigt ausschnittsweise eine Ansicht der Buchperforationsstraße aus Fig. 1.

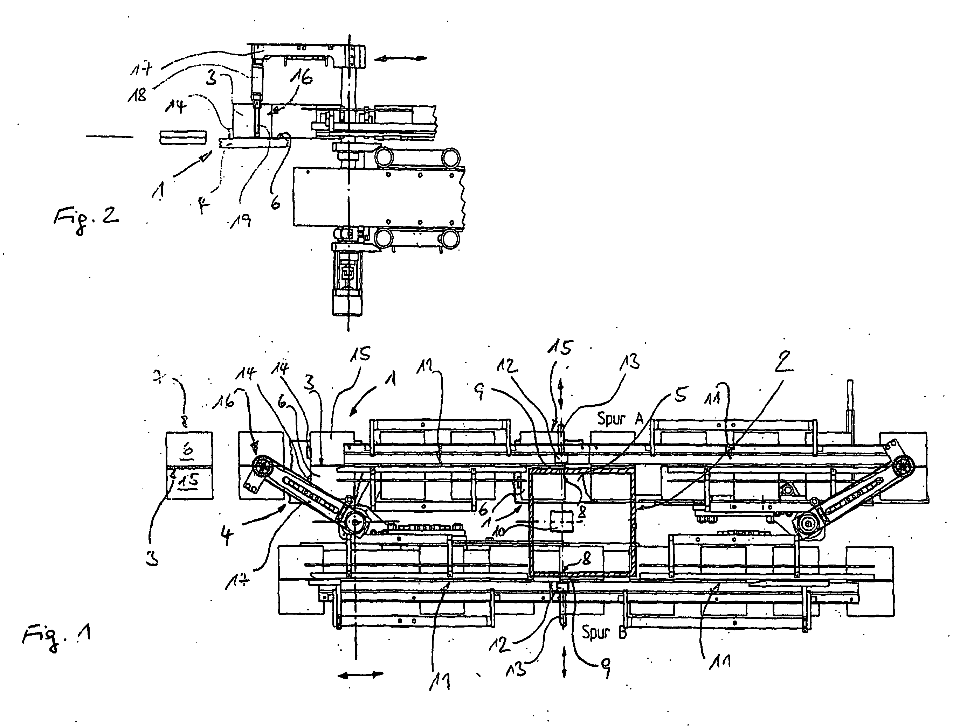

Die in Fig. 1 schematisch in einer Draufsicht dargestellte Buchperforationsstraße umfasst eine Transportvorrichtung 1 mit einer Spur A und einer Spur B und eine zwischen den Spuren A und B angeordnete Lasereinheit 2 zum Perforieren der Blätter 3. Jeder Spur A und B ist ein Förderer 4 (in Spur B nicht dargestellt), der eine Anlageplatte 5 für ein Deckelteil 6 eines Buches 7 ausbildet, zugeordnet. In einer Abwandlung des vorliegenden Ausführungsbeispiels kann der Förderer relativ schmal ausgebildet sein und an einer mit einer im wesentlichen der Breite des Förderers entsprechenden Ausnehmung versehenen Anlageplatte vorbeilaufen, so dass das Deckelteil in diesem Fall auf der Anlageplatte und dem Förderer aufliegen kann. Die im Schnitt rahmenartig ausgebildete Lasereinheit 2 ist mit zwei einander gegenüberliegenden, jeweils eine Ausnehmung 8 aufweisenden Laserplatten 9 und einem innenliegend angeordneten Spiegel 10 zur Umlenkung eines Laserstrahls versehen. Die Transportvorrichtung 1 ist ferner mit sich in Transportrichtung erstreckenden, in jeder Spur A und B vorgesehenen, kanalartigen Führungen 11 zum Führen der aufgerichteten Blätter 3 versehen. Die Laserplatten 9 sind in jeder Spur A und B parallel zu den Führungen 11 angeordnet. Gegenüber jeder Laserplatte 9 ist eine über eine Kolben-/Zylindereinheit 13 verstellbar vorgesehene Andruckplatte 12 auf Höhe der Ausnehmung 8 angeordnet. Jeder Förderer 4 ist mit Mitnahmenocken 14 für das eine Deckelteil 15 und das andere Deckelteil 6 versehen. Eingangs- und ausgangsseitig der Buchperforationsstraße ist jeweils ein Greifer 16 mit einem hin- und herschwenkbaren Schwenkarm 17 und zwei aufeinander zu - und voneinander weg schwenkbaren Armen 19 angeordnet. Jeder Schwenkarm 17 trägt an seinem freien Ende eine Buchdreheinheit 18. Die Buchdreheinheit 18 ist um 180 Grad mittels einer Ritzel/Riemeneinheit verdrehbar ausgebildet und mit der Schwenkachse der Arme 19 fest verbunden, so dass diese nach einem Griff der aufgerichteten, zu perforierenden Blätter 3 gedreht werden können. Die Schwenkachse des Greifers 16 ist mittels eines Motors drehantreibbar und parallel zu den Führungen 11 hin- und herbewegbar vorgesehen.

Die im Ausführungsbeispiel dargestellte Buchperforationsstraße wird taktweise (in den Figuren von links nach rechts) betrieben. Mittels nicht dargestellter Arbeitsschritte werden die zu perforierenden Blätter 3 eines Buches 7 aufgeschlagen und aufgerichtet, so dass diese einen Winkel von etwa 90 Grad mit dem beim Aufrichten zurückgelassenen anderen Deckelteil 6 einschließen. In der Spur A ankommende Bücher 7 werden durch den Greifer 16 an den aufgerichteten, zu perforierenden Blättern 3 gegriffen und abwechselnd in eine um 180 Grad gedrehte Lage auf Spur A gebracht oder in unveränderter Orientierung auf die Spur B übergeben. Beispielsweise wird das erste Buch 7 von den Armen 19 gegriffen, mittels der Buchdreheinheit 18 gedreht und in die erste Führung 11 der Spur A eingeführt. Das darauffolgende, zweite Buch 7 wird von den Armen 19 gegriffen und ohne Verdrehung in die erste Führung 11 von Spur B eingelegt. Das dritte Buch 7 wird dann wieder gedreht und in die erste Führung 11 der Spur A eingefügt, während das vierte Buch 7 wiederum ohne Änderung seiner Orientierung in die erste Führung 11 der Spur B übergeben wird. Den Weitertransport der Bücher 7 übernehmen dann wieder die Förderer 4 mit den Mitnahmenocken 14. Die Bestückung der Spuren A und B auf die vorgenannte Weise hat den Vorteil, dass sie sehr schnell durchführbar ist. Bleibt ein Buch 7 in seiner Spur A, wird es nur gedreht; soll es von Spur A nach Spur B übergeben werden, wird es nur übergeben. Die Bearbeitungszeiten der Übergabe in eine um 180 Grad gegeneinander gedrehte Lage sind also auf beide Spuren verteilt. Die zu perforierenden Blätter 3 des ersten Buches 7 gelangen schließlich in noch lose aneinander liegender Stellung vor die Ausnehmung 8 der Laserplatte 9 der Spur A. Dann werden sie über einen Vortrieb der Kolben-/Zylindereinheit 13 mit der Andruckplatte 12 auf die Laserplatte 9 gepresst, so dass die zu perforierenden Blätter 3 zur Anlage aneinander kommen und Freiräume zwischen den Blättern 3 verschwinden. Dann erfolgt nach entsprechender Umlenkung des Spiegels 10 die gewünschte Perforation der Blätter 3. Während der Perforation des ersten Buches 7 in der Spur A ist bereits das zweite Buch 7 in der Spur B mittels des Förderers 4 in seine Perforationsstellung vor die Ausnehmung 8 der Laserplatte 9 der Spur B transportiert und ggf. schon die Andruckplatte 9 auf die zu perforierenden Blätter 3 gepresst worden. Nach Beendigung der Perforation in Spur A kann der Laserstrahl quasi unmittelbar zur Perforation des Buches 7 in der Spur B durch Schwenken des Spiegels 10 umgelenkt werden, bevor er dann wiederum in Spur A für die Perforation des dritten Buches in Spur A gebraucht wird. Am Ende der Buchperforationsstraße werden die Bücher 7 der beiden Spuren A und B dann wieder in eine Spur mittels eines zweiten Greifers 16 in eine gleichorientierte Lage zusammengeführt.

## Patentansprüche

1. Einrichtung zum Perforieren eines Buches mit zwei durch eine Falz miteinander verbundenen Deckelteilen (6,15) und Blättern (3), umfassend eine Tansportvorrichtung (1) für das Buch (7), eine Lasereinheit (2) zum perforieren von Blättern (3), eine Anlageplatte (5) für ein Deckelteil (6) und eine den Laserstrahlen zugewandte Andruckplatte (12) zum Zusammendrücken der zu perforierenden Blätter (3), **dadurch gekennzeichnet, dass** eine im wesentlichen parallel zu der Andruckplatte (12) beabstandete Laserplatte (9) vorgesehen und die Andruckplatte (12) gegenüber der Anlageplatte (5) geneigt angeordnet ist.

2. Einrichtung nach Anspruch 1, **dadurch gekennzeichnet, dass** die Andruckplatte (12) gegenüber der Anlageplatte (5) um mehr als 45 Grad geneigt angeordnet ist.

3. Einrichtung nach Anspruch 1 oder 2, **dadurch gekennzeichnet, dass** die Andruckplatte (12) auf die Laserplatte (9) hin- und herbewegbar vorgesehen ist.

4. Einrichtung nach einem der Ansprüche 1 bis 3, **dadurch gekennzeichnet, dass** die Laserplatte (9) mit einer Ausnehmung (8) für den Durchtritt von Laserstrahlen der Lasereinheit (2) versehen ist.

5. Einrichtung nach einem der Ansprüche 1 bis 4, **dadurch gekennzeichnet, dass** die Transportvorrichtung (1) zwei Spuren A und B mit jeweils einem Förderer (4) aufweist, die Lasereinheit (2) zwischen den Spuren A und B angeordnet ist, einen in Richtung der Spur A und Spur B jeweils hin- und herschwenkbaren Spiegel (10) und zwei einander gegenüberliegende Laserplatten (9) aufweist.

6. Einrichtung nach einem der Ansprüche 1 bis 5, **dadurch gekennzeichnet, dass** die Transportvorrichtung (1) einen in die Spuren A und B hin- und herschwenkbaren Greifer (16) aufweist.

7. Einrichtung nach Anspruch 6, **dadurch gekennzeichnet, dass** der Greifer (16) mit einer Buchdreheinheit (18) versehen ist.

8. Einrichtung nach Anspruch 6 oder 7, **dadurch gekennzeichnet, dass** der Greifer (16) zwei aufeinander zu und voneinander weg schwenkbare Arme (19) aufweist.

9. Einrichtung nach Anspruch 8, **dadurch gekennzeichnet, dass** ein Arm (19) des Greifers (16) an seinem freien Ende seitlich auswärts abgewinkelt ausgebildet ist.

10. Einrichtung nach einem der Ansprüche 6 bis 9, **dadurch gekennzeichnet, dass** der Greifer (16) parallel zu den Spuren A und B verschiebbar angeordnet ist.

11. Einrichtung nach einem der Ansprüche 6 bis 10, **dadurch gekennzeichnet, dass** die Förderer (4) als umlaufende, Mitnahmenocken (14) für ein Buch (7) tragende Endlosförderer ausgebildet sind.

12. Verfahren zum Perforieren eines Buches mit zwei durch eine Falz miteinander verbundenen Deckelteilen (6,15) und Blättern (3), bei dem das Buch (7) zu einer Lasereinheit (2) transportiert, durch Umschwenken eines Deckelteils (15) geöffnet wird, nicht zu perforierende Blätter (3) umgeblättert und zu perforierende Blätter (3) hintereinanderliegend zusammengedrückt und mittels Laserstrahlen perforiert werden, **dadurch gekennzeichnet, dass** die zu perforierenden Blätter (3) zum Perfozum Perforieren unter Zurücklassung des anderen Deckelteils (6) aufgerichtet und in einer gegenüber dem anderen Deckelteil (6) geneigten Stellung perforiert werden.

13. Verfahren nach Anspruch 12, **dadurch gekennzeichnet, dass** die Neigung mehr als 45 Grad beträgt.

14. Verfahren nach Anspruch 12 oder 13, **dadurch gekennzeichnet, dass** die zu perforierenden Blätter (3) in ihrer aufgerichteten und gegenüber dem anderen Deckelteil (6) geneigten Stellung zusammengedrückt werden.

15. Verfahren nach einem der Ansprüche 12 bis 14, **dadurch gekennzeichnet, dass** die Bücher (7) in zwei benachbarten Spuren A und B transportiert und die zu perforierenden Blätter (3) eines Buches (7) der Spur A und eines Buches (7) der Spur B durch Umlenkung des Laserstrahls der Lasereinheit (2) spurweise abwechselnd perforiert werden.

16. Verfahren nach einem der Ansprüche 12 bis 15, **dadurch gekennzeichnet**, da die Bücher (7) in der Spur A gegenüber den Büchern (7) der Spur B um 180 Grad gedreht perforiert werden.

## Claims

1. Apparatus for perforating a book having two parts (6, 15) of a cover and leaves (3), which parts and leaves are connected to one another by a fold, said apparatus comprising a transport device (1) for the book (7), a laser unit (2) for perforating leaves (3), a bearing plate (5) for one part (6) of the cover and a pressure-applying plate (12), which faces towards the laser beams, for pressing together the leaves (3) which are to be perforated, **characterised in that** a laser plate (9) is provided which is at a distance from, and substantially parallel to, the pressure-applying plate (12) and said pressure-applying plate (12) is disposed in such a way as to be inclined in relation to the bearing plate (5).

2. Apparatus according to claim 1, **characterised in that** the presaure-applying plate (12) is disposed in such a way as to be inclined by more than 45 degrees in relation to the bearing plate (5).

3. Apparatus according to claim 1 or 2, **characterised in that** the pressure-applying plate (12) is provided in such a way as to be movable to and fro onto the laser place (9).

4. Apparatus according to one of claims 1 to 3, **characterised in that** the laser plate (9) is provided with a clearance (8) for the passage of laser beams from the laser unit (2).

5. Apparatus according to one of claims 1 to 4, **characterised in that** the transport device (1) has two tracks A and B having a conveyer (4) in each case, and the laser unit (2) is disposed between said tracks A and B and has a mirror (10) which can be pivoted to and fro in the direction of track A and track B in each case, and two mutually opposed laser places (9).

6. Apparatus according to one of claims 1 to 5, **characterised in that** the transport device (1) has a gripper (16) which can be pivoted to and fro into the tracks A and B.

7. Apparatus according to claim 6, **characterised in that** the gripper (16) is provided with a book-turning unit (18).

8. Apparatus according to claim 6 or 7, **characterised in that** the gripper (16) has two arms (19) which can be pivoted towards and away from one another.

9. Apparatus according to claim 8, **characterised in that** one arm (19) of the gripper (16) is constructed in such a way as to be angled laterally outwards at its free end.

10. Apparatus according to one of claims 6 to 9, **characterised in that** the gripper (16) is disposed in such a way as to be displaceable parallel to the tracks A and B.

11. Apparatus according to one of claims 6 to 10, **characterised in that** the conveyers (4) are constructed as revolving endless conveyers which carry driving dogs (14) for a book (7).

12. Method of perforating a book having two parts (6, 15) of a cover and leaves (3), which parts and leaves are connected to one another by a fold, in which method the book (7) is transported to a laear unit (2) and opened by the pivoting-over of one part (15) of the cover, leaves (3) which are not to be perforated are turned over, and leaves (3) which are to be perforated are pressed together in such a way as to be located one behind another and are perforated by means of laser beams, **characterised in that** the leaves (3) which are to be perforated are aligned for perforation purposes, leaving behind the other part (6) of the cover, and are perforated in a position in which they are inclined in relation to said other part (6) of the cover.

13. Method according to claim 12, **characterised in that** the inclination amounts to more than 45 degrees.

14. Method according to claim 12 or 13, **characterised in that** the leaves (3) which are to be perforated are pressed together in the position in which they are aligned and inclined in relation to the other part (6) of the cover.

15. Method according to one of claims 12 to 14, **characterised in that** the books (7) are transported in two adjacent tracks A and B and the leaves (3) of a book (7) in track A which are to be perforated and the leaves (3) of a book (7) in track B which are to be perforated are perforated alternately, track-wise, by deflection of the laser beam from the laser unit (2).

16. Method according to one of claims 12 to 15, **characterised in that** the books (7) in track A are perforated in such a way as to be rotated by 180 degrees in relation to the books (7) in track B.

## Revendications

1. Appareil pour perforer un livre comportant deux éléments de couverture (6, 15), reliés l'un à l'autre par un pli, et des feuillets (3), appareil comprenant un dispositif de transport (1) pour le livre (7), une unité laser (2) pour la perforation de feuillets (3), une plaque d'appui (5) pour un élément de couverture (6) et une plaque de pression (12) tournée vers les rayons laser pour comprimer les feuillets (3) à perforer, **caractérisé en ce qu'**une plaque à laser (9), placée à une certaine distance de la plaque de pression (12), sensiblement parallèlement à celle-ci, est prévue et la plaque de pression (12) est disposée sous une inclinaison par rapport à la plaque d'appui (5).

2. Appareil selon la revendication 1, **caractérisé en ce que** la plaque de pression (12) est disposée sous une inclinaison de plus de 45 degrés par rapport à la plaque d'appui (5).

3. Appareil selon la revendication 1 ou 2, **caractérisé en ce que** la plaque de pression (12) est prévue déplaçable en va-et-vient sur la plaque à laser (9).

4. Appareil selon l'une des revendications 1 à 3, **caractérisé en ce que** la plaque à laser (9) est pourvue d'un évidement (8) pour le passage de rayons laser de l'unité laser (2).

5. Appareil selon l'une des revendications 1 à 4, **caractérisé en ce que** le dispositif de transport (1) présente deux voies A et B, ayant chacune un transporteur (4), et l'unité laser (2) est disposée entre les voies A et B et comporte un miroir (10) pouvant pivoter dans un sens et dans l'autre, en direction respectivement de la voie A et de la voie B, et deux plaques à laser (9) placées l'une en vis-à-vis de l'autre.

6. Appareil selon l'une des revendications 1 à 5, **caractérisé en ce que** le dispositif de transport (1) comporte une pince (16) pouvant pivoter dans un sens et dans l'autre dans les voies A et B.

7. Appareil selon la revendication 6, **caractérisé en ce que** la pince (16) est munie d'une unité de rotation de livre (18).

8. Appareil selon la revendication 6 ou 7, **caractérisé en ce que** la pince (16) comporte deux bras (19) pouvant pivoter l'un vers l'autre et l'un à l'écart de l'autre.

9. Appareil selon la revendication 8, **caractérisé en ce qu'**un bras (19) de la pince (16) est d'une configuration repliée latéralement vers l'extérieur à son extrémité libre.

10. Appareil selon l'une des revendications 6 à 9, **caractérisé en ce que** la pince (16) est montée déplaçable en translation parallèlement aux voies A et B.

11. Appareil selon l'une des revendications 6 à 10, **caractérisé en ce que** les transporteurs (4) sont conçus sous la forme de transporteurs sans fin en circulation continue, portant des taquets entraîneurs (14) pour un livre (7).

12. Procédé pour perforer un livre ayant deux éléments de couverture (6, 15), reliés l'un à l'autre par un pli, et des feuillets (3), selon lequel le livre (7) est transporté à une unité laser (2) et est ouvert par renversement d'un élément de couverture (15), et des feuillets (3) qui ne sont pas à perforer sont retournés alors que des feuillets (3) à perforer sont comprimés, placés les uns derrière les autres, et sont perforés à l'aide de rayons laser, **caractérisé en ce que** les feuillets (3) à perforer sont, en vue de la perforation, redressés en laissant à l'écart l'autre élément de couverture (6) et sont perforés dans une position inclinée par rapport à l'autre élément de couverture (6).

13. Procédé selon la revendication 12, **caractérisé en ce que** l'inclinaison est de plus de 45 degrés.

14. Procédé selon la revendication 12 ou 13, **caractérisé en ce que** les feuillets (3) à perforer sont comprimés dans leur position redressée et inclinée par rapport à l'autre élément de couverture (6).

15. Procédé selon l'une des revendications 12 à 14, **caractérisé en ce que** les livres (7) sont transportés sur deux voies adjacentes A et B et les feuillets (3) à perforer d'un livre (7) de la voie A et d'un livre (7) de la voie B sont perforés en alternance entre les voies par déviation du rayon laser de l'unité laser (2).

16. Procédé selon l'une des revendications 12 à 15, **caractérisé en ce que** les livres (7) présents sur la voie A sont perforés en étant tournés de 180 degrés par rapport aux livres (7) de la voie B.
